# EUROPÄISCHE PATENTSCHRIFT

(11) **EP 2 555 278 B1**
(45) Veröffentlichungstag und Bekanntmachung des Hinweises auf die Patenterteilung: **26.03.2014**
(21) Anmeldenummer: 12004686.7
(22) Anmeldetag: 22.06.2012
(51) Int. Cl.: H01M 2/10

(54) **Gehäuse aus Stahlblech**
Sheet metal housing
Boîtier en tôle d'acier

(30) Priorität: 30.07.2011 DE 102011109016
(43) Veröffentlichungstag der Anmeldung: 06.02.2013
(73) Patentinhaber: GEDIA Gebrüder Dingerkus GmbH, 57439 Attendorn (DE)
(72) Erfinder: Böhmer, Andreas, 57368 Lennestadt (DE); Köster, Manuel, 51647 Gummersbach (DE)
(74) Vertreter: Köchling, Conrad-Joachim

(56) Entgegenhaltungen:
- GB-A- 2 264 471
- US-A- 4 508 794
- US-A1- 2005 250 005

## Beschreibung

Die Erfindung betrifft ein Gehäuse aus Stahlblech zur Aufnahme einer Vielzahl von Akkumulatoren, die als Energiequelle für den Fahrantrieb von Kraftfahrzeugen, insbesondere Automobilen, bestimmt sind, wobei das Gehäuse eine Bodenwandung, damit verbundene umlaufende Seitenwandungen und gegebenenfalls einen mit den Seitenwandungen lösbar verbundenen Deckel aufweist.

Im Stand der Technik ist es bekannt, Fahrzeuge allein oder zusätzlich mit elektromotorischen Antrieben zu versehen. Diese elektromotorischen Antriebe müssen mit einer Energiequelle versorgt werden. Diese Energiequelle wird durch eine Vielzahl von Akkumulatoren gebildet, die im Fahrzeug angeordnet und installiert sind.

Bekannt ist es dazu, die Vielzahl von Akkumulatoren in einem Gehäuse aus Stahlblech anzuordnen, damit eine ordnungsgemäße Halterung und Befestigung an der Karosseriestruktur des Fahrzeuges ermöglicht ist. Vorzugsweise ist dieses Gehäuse so ausgebildet, dass es eine Bodenwandung, umlaufende Seitenwandungen und einen mit den Seitenwandungen verbundenen Deckel aufweist, so dass eine geschlossene Gehäuseeinheit gebildet ist. Die Deckel können beispielsweise mit dem Gehäuse verschraubt werden, um eine sichere Verbindung zu erreichen. Auch ist es möglich, den Deckel gleichgeformt wie das Gehäuse auszubilden, also ebenfalls mit einer Bodenwandung und umlaufenden Seitenwandungen, wobei dann der Deckel in entgegengesetzter Richtung zum Unterteil orientiert und auf dieses aufgesetzt und mit diesem verschraubt oder in anderer Weise verbunden werden kann.

Ein Problem, welches sich bei einer solchen Ausbildung und Anordnung ergibt, ist, dass das Gehäuse den Belastungen, die im Crash- Fall auf das Gehäuse einwirken, nicht standhalten kann, so dass das Gehäuse übermäßig verformt und die darin befindlichen Akkumulatoren beschädigt werden, was größere Schäden zur Folge haben kann.

Regelmäßig werden solche Gehäuse derart in Fahrzeugen installiert, dass zwei parallele Seitenwandungen des Gehäuses parallel zur Fahrtrichtung des Fahrzeuges ausgerichtet sind und zwei Wandungen quer zur Fahrtrichtung gerichtet sind. Die Wandungen, die quer zur Fahrtrichtung gerichtet sind, sind durch die Crash- Systeme des Fahrzeuges im Frontbereich und im Heckbereich des Fahrzeuges ausreichend gesichert, weil durch diese Crash- Systeme ausreichend Energie abgebaut wird (im Crash-Fall), so dass das Gehäuse in dieser Richtung keine höheren Kräfte aufnehmen muss. Bei einem Seitencrash allerdings sind die Gehäuse nicht ausreichend gesichert, so dass eine große Gefahr besteht, dass das Gehäuse bei einem Crash zerstört oder beschädigt wird und damit auch die Akkumulatoren beschädigt oder zerstört werden.

Ausgehend von diesem Stand der Technik liegt der Erfindung die Aufgabe zugrunde, ein Gehäuse gattungsgemäßer Art zu schaffen, welches geeignet ist, im Falle eines Crashs des damit ausgestatteten Fahrzeuges den hohen Belastungen des Crashs zu widerstehen, ohne dass das Gehäuse übermäßig verformt oder zerstört wird, so dass die darin befindlichen Akkumulatoren sicher gehalten werden.

Zur Lösung dieser Aufgabe schlägt die Erfindung vor, dass die Bodenwandung und/oder die Seitenwandungen und/oder der Deckel erste Zonen mit gegenüber zweiten Zonen, die die restlichen Bereiche der Wandungen bilden, höherer Festigkeit aufweist oder aufweisen, wobei mindestens die ersten Zonen warmumgeformt sind und nur die ersten Zonen vergütet sind.

Dadurch, dass die Bodenwandung und/oder die Seitenwandungen und/oder der Deckel mit ersten Zonen höherer Festigkeit ausgestattet werden, ist es in einfacher Weise möglich, Widerstandsstrukturen an dem Gehäuse auszubilden, um im Falle von Crash- Belastungen diese Belastungen aufnehmen zu können, ohne dass das Gehäuse zerstört oder übermäßig deformiert wird. Je nach Anwendungsfall kann es ausreichen, nur die Bodenwandung mit entsprechenden ersten Zonen höherer Festigkeit auszustatten. Es kann auch vorgesehen sein, dass nur die Seitenwandungen entsprechende erste Zonen höherer Festigkeit aufweisen oder auch nur der Deckel entsprechende erste Zonen höherer Festigkeit aufweist. Kombinationen dieser Möglichkeiten sind machbar, je nach Verwendungsfall und zu erwartenden Belastungskräften.

Bevorzugt ist dabei vorgesehen, dass die Bodenwandung und/oder die Seitenwandungen und/oder der Deckel aus hochfestem Stahl bestehen.

Insbesondere dann, wenn die Bodenwandung, die Seitenwandungen und/oder der Deckel aus hochfestem Stahl oder höchstfestem Stahl bestehen, können entsprechende erste Zonen mit gegenüber dem Grundmaterial erheblich höherer Festigkeit bei der Warmumformung und anschließenden Vergütung erzeugt werden. Durch diese Ausbildung ist es auch möglich, die Wandstärke des Gehäuses zu minimieren und damit Gewicht einzusparen, ohne dass eine Deformierung des Gehäuses bei hohen Belastungen auftreten kann.

Besonders bevorzugt ist ferner vorgesehen, dass die Bodenwandung mit den Seitenwandungen einstückig ausgebildet und als warmgeformte Wanne ausgebildet ist, deren Wandungen in den vorbestimmten ersten Zonen vergütet sind.

Bei dieser Ausgestaltung ist es möglich, aus einem Blechzuschnitt aus hochfestem Stahlblech das Gehäuseteil, bestehend aus Bodenwandung und Seitenwandungen einstückig warmumzuformen und anschließend dieses Teil in ausgewählten ersten Zonen zu vergüten, um die gewünschte Festigkeit in bestimmten Bereichen zu erreichen.

Bevorzugt ist ferner vorgesehen, dass das Gehäuse im Wesentlichen rechteckig ausgebildet ist und mit zwei zueinander parallelen Randkanten parallel zur Längsmittelachse des damit ausgestatteten Kraftfahrzeuges ausgerichtet am Kraftfahrzeug befestigt ist, und dass die ersten Zonen Materialbereiche des Bodens und/oder der Seitenwandung und/oder des Deckels sind, die überwiegend quer zur Längsmittelachse des Fahrzeugs ausgerichtet sind.

Durch diese Anordnung und Ausrichtung wird erreicht, dass im Falle eines Seitencrashs des mit diesem Gehäuse ausgestatteten Fahrzeuges das Gehäuse den entsprechenden Belastungen standhalten kann, weil die ersten Zonen höherer Festigkeit im Wesentlichen in Richtung des Kraftangriffes bei einem Seitencrash ausgerichtet sind.

Zusätzlich kann vorgesehen sein, dass die Seitenwandungen an ihrem der Bodenwandung abgewandten Randkanten einen Flanschrand bildend nach außen abgewinkelt sind.

Besonders bevorzugt ist vorgesehen, dass die ersten Zonen sich über Teilbereiche der Bodenwandung erstrecken, die jeweils an zwei zueinander parallele Seitenwandungen anschließen, und sich über diese Seitenwandungen erstrecken sowie die Teile der dazu rechtwinklig gerichteten anschließenden Seitenwandungen in der Breite, die durch die in der Bodenwandung vorgesehene erste Zone bestimmt ist, und sich über die anschließenden Flanschrandteile dieser Bereiche der Seitenwandungen erstrecken.

Durch diese Anordnung der ersten Zonen wird neben der hohen Festigkeit dieser Zonen noch der Effekt erreicht, dass durch die Formgebung des Gehäuses eine Stabilisierung im Belastungsfall erfolgt, weil die Formgebung im Eckbereich des Gehäuses und die Anordnung der ersten Zonen in diesem kritischen Bereich zu einer kombinatorischen Wirkung führt, die für eine entsprechende Belastung besonders wirksam ist.

Zudem ist bevorzugt vorgesehen, dass die warmgeformte Wanne in den Eckbereichen der Seitenwandungen einen sehr geringen Radius bildet, der einer rechtwinkeligen Ausbildung des Eckbereiches nahe kommt.

Dadurch, dass die Wanne warmgeformt wird, ist es gegenüber der Kaltumformung möglich, den Eckbereich nahezu rechtwinkelig auszubilden, also nur einen sehr geringen Radius vorzusehen. Dies führt wiederum dazu, dass die im Regelfall rechteckigen Akkumulatoren oder Akkumulatorenpackungen besonders gut formfüllend in dem Gehäuse untergebracht werden können, so dass das Gehäuse gegenüber dem darin befindlichen Paket von Akkumulatoren nur geringfügig größer sein muss.

Ein Ausführungsbeispiel der Erfindung ist in der Zeichnung dargestellt und im Folgenden näher beschrieben.

Es zeigt:
- Figur 1: einen Teil eines Gehäuses in Drauf gesehen;
- Figur 2: desgleichen in Seiteansicht.

In der Zeichnung ist ein Gehäuse aus Stahlblech zur Aufnahme einer Vielzahl von Akkumulatoren 1 gezeigt, die als Energiequelle für den Fahrantrieb von Kraftfahrzeugen dienen. Das Gehäuse weist eine Bodenwandung 2, damit verbundene umlaufende Seitenwandungen 3 und einen mit den Seitenwandungen 3 lösbar verbundenen, in der Zeichnung nicht dargestellten Deckel auf. Der Deckel kann mit den Seitenwandungen verschraubt oder in sonstiger Weise vorzugsweise lösbar verbunden sein, damit zu Wartungszwecken ein Zugriff zu den Akkumulatoren 1 ermöglicht ist. Erfindungsgemäß weist mindestens die Bodenwandung 2, vorzugsweise aber auch einige Seitenwandungen 3 und vorzugsweise auch der Deckel erste Zonen 4,5,6 auf, die eine höhere Festigkeit haben als die restlichen Bereiche der Wandungen dieser Teile, die zwei Zonen bilden, die in der Zeichnung nicht gesondert gekennzeichnet sind. Die ersten Zonen sind in der Zeichnung gestrichelt gezeigt.

Hierbei sind mindestens die ersten Zonen 4,5,6 warmumgeformte Bereiche, die vergütet sind, so dass sie eine höhere Festigkeit aufweisen als der übrige Bereich des Gehäuses.

Vorzugsweise bestehen sämtliche Bestandteile des Gehäuses aus hochfestem Stahl oder höchstfestem Stahl. Im Ausführungsbeispiel ist, wie dies bevorzugt ist, die Bodenwandung 2 mit den Seitenwandungen 3 einstückig ausgebildet und als warmgeformte Wanne ausgebildet. Die Bodenwandung 2 und Seitenwandungen 3 sind in den vorbestimmten ersten Zonen 4,5,6 vergütet, so dass sie eine höhere Festigkeit als der übrige Bereich aufweisen.

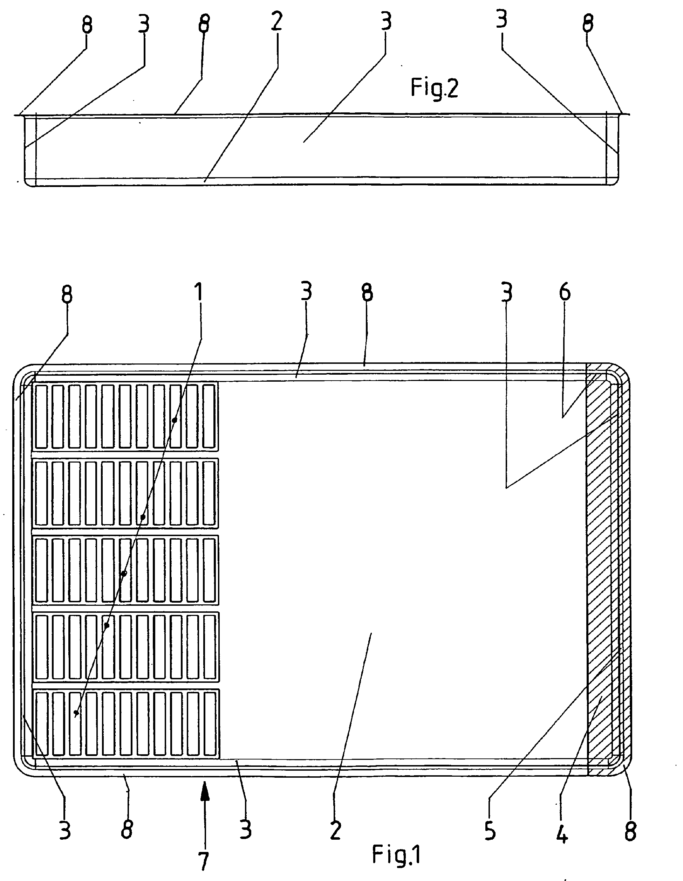

Wie insbesondere aus Figur 1 ersichtlich, ist das Gehäuse im Wesentlichen rechteckig ausgebildet und mit zwei zueinander parallelen Randkanten (in Zeichnungsfigur 1 die obere Randkante und die untere Randkante) parallel zur Längsmittelachse des damit ausgestatteten Kraftfahrzeuges ausgerichtet am Fahrzeug befestigt. Die ersten Zonen 4,5,6 sind überwiegend quer zur Mittellängsachse des Fahrzeuges ausgerichtet, so dass sie also einer Kraftbelastung in einem Seitencrashfall, wie er durch den Pfeil 7 angedeutet ist, eine stabile, schwer verformbare Kontur bilden.

Darüber hinaus sind die Seitenwandungen 3 an ihren der Bodenwandung 2 abgewandten Randkanten einen Flanschrand 8 bildend nach außen abgewinkelt.

Besonders bevorzugt ist eine Ausbildung, wie sie in der Zeichnungsfigur 1 rechts dargestellt ist, wobei die ersten Zonen 4,5,6 sich über Teilbereiche der Bodenwandung 2 erstrecken, die jeweils an zwei zueinander parallele Seitenwandungen 3 anschließen. Diese ersten Zonen 5 erstrecken sich über die gesamte Seitenwandung 3 im rechten und linken Bereich gemäß Figur 1. Darüber hinaus verlaufen diese ersten Zonen 6 auch in Teilbereichen der dazu etwa rechtwinklig anschließenden oberen und unteren Seitenwandungen 3, und zwar in der Breite, wie sie durch die in der Bodenwandung 2 vorgesehene erste Zone 4 bestimmt ist. Zudem erstrecken sich diese ersten Zonen auch über die anschließenden Flanschrandteile des Flanschrandes 8. Diese Bestandteile sind in der Figur 1 sämtlich gestrichelt gezeigt. Zusätzlich ist vorzugsweise auch der Deckelmit einer parallel zur ersten Zone 4 der Bodenwandung 2 ausgerichteten ersten Zone gleicher Breite ausgestattet. In Figur 1 ist der Übersichtlichkeit halber nur die Ausbildung der ersten Zonen im rechten Bereich des Gehäuses gezeigt. In gleicher Weise ist auch das linke Gehäuseteil ausgebildet. Zudem können auch weitere erste Zonen in weiteren Bereichen der Bodenwandung 2 und der Seitenwandung 3 oder des nicht dargestellten Deckels vorgesehen sein, je nach Beanspruchung.

Wie insbesondere aus Figur 1 ersichtlich, ist die das Gehäuse bildende warmgeformte Wanne in den Eckbereichen der Seitenwandungen 3 so geformt, dass nur ein sehr geringer Radius gebildet ist, der einer rechtwinkligen Ausbildung des Eckbereiches nahe kommt. Dies ist deswegen vorteilhaft, weil damit die Pakete von Akkumulatoren 1, die regelmäßig rechteckig als Quader ausgebildet sind, möglichst formpassend in den Behälter eingesetzt werden können, ohne dass große Freiräume benötigt werden oder gebildet sind, die zu einer Vergrößerung des Gehäuses führen würden.

Die insbesondere in Figur 1 dargestellte Ausbildung ist vor allem dann vorteilhaft, wenn das Gehäuse so in die Kfz- Struktur eingebaut wird, dass die obere und untere Seitenwandung 3 parallel zur Mittellängsachse des Fahrzeuges verläuft. In diesem Falle bilden die Crash-Strukturen des Fahrzeuges Absorptionszonen, die entsprechende Energien beim Crash- Fall von vorn oder hinten aufnehmen können. Bei einem Seitencrash in Richtung des Pfeiles 7 können die ersten Zonen 4,5,6 entsprechende Belastungen aufnehmen, um eine Deformation des Gehäuses weitestgehend zu unterbinden.

Die Erfindung ist nicht auf die Ausführungsbeispiele beschränkt, sondern im Rahmen der Offenbarung vielfach variabel.

## Patentansprüche

1. Gehäuse aus Stahlblech zur Aufnahme einer Vielzahl von Akkumulatoren (1), die als Energiequelle für den Fahrantrieb von Kraftfahrzeugen, insbesondere Automobilen, bestimmt sind, wobei das Gehäuse eine Bodenwandung (2), damit verbundene umlaufende Seitenwandungen (3) und gegebenenfalls einen mit den Seitenwandungen (3) lösbar verbundenen Deckel aufweist, **dadurch gekennzeichnet, dass** die Bodenwandung (2) und/oder die Seitenwandungen (3) und/oder der Deckel erste Zonen (4,5,6) mit gegenüber zweiten Zonen, die die restlichen Bereiche der Wandungen bilden, höherer Festigkeit aufweist oder aufweisen, wobei mindestens die ersten Zonen (4,5,6) warmumgeformt sind und nur die ersten Zonen (4,5,6) vergütet sind.

2. Gehäuse aus Stahl nach Anspruch 1, **dadurch gekennzeichnet, dass** die Bodenwandung (2) und/oder die Seitenwandungen (3) und/oder der Deckel aus hochfestem Stahl bestehen.

3. Gehäuse aus Stahl nach einem der Ansprüche 1 oder 2, **dadurch gekennzeichnet, dass** die Bodenwandung (2) mit den Seitenwandungen (3) einstückig ausgebildet und als warmgeformte Wanne ausgebildet ist, deren Wandungen in den vorbestimmten ersten Zonen (4, 5, 6,) vergütet sind.

4. Gehäuse aus Stahl nach einem der Ansprüche 1 bis 3, **dadurch gekennzeichnet, dass** das Gehäuse im Wesentlichen rechteckig ausgebildet ist und mit zwei zueinander parallelen Randkanten parallel zur Längsmittelachse des damit ausgestatteten Kraftfahrzeuges ausgerichtet am Kraftfahrzeug befestigt ist, und dass die ersten Zonen (4,5,6) Materialbereiche des Bodens (2) und/oder der Seitenwandung (3) und/oder des Deckels sind, die überwiegend quer zur Längsmittelachse des Fahrzeugs ausgerichtet sind.

5. Gehäuse aus Stahl nach einem der Ansprüche 1 bis 4, **dadurch gekennzeichnet, dass** die Seitenwandungen (3) an ihrem der Bodenwandung (2) abgewandten Randkanten einen Flanschrand (8) bildend nach außen abgewinkelt sind.

6. Gehäuse aus Stahl nach einem der Ansprüche 1 bis 5, **dadurch gekennzeichnet, dass** die ersten Zonen (4,5,6) sich über Teilbereiche der Bodenwandung (2) erstrecken, die jeweils an zwei zueinander parallele Seitenwandungen (3) anschließen, und sich über diese Seitenwandungen (3) erstrecken sowie Teile der dazu rechtwinklig gerichteten anschließenden Seitenwandungen (3) in der Breite, die durch die in der Bodenwandung (2) vorgesehene erste Zone (4) bestimmt ist, und sich über die anschließenden Flanschrandteile (8) dieser Bereiche der Seitenwandungen (3) erstrecken.

7. Gehäuse aus Stahl nach einem der Ansprüche 3 bis 6, **dadurch gekennzeichnet, dass** die warmgeformte Wanne in den Eckbereichen der Seitenwandungen (3) einen sehr geringen Radius bildet, der einer rechtwinkligen Ausbildung des Eckbereiches nahe kommt.

## Claims

1. A sheet metal housing for receiving a plurality of accumulators (1), which are intended as an energy source for the propulsion drive of motor vehicles, particularly automobiles, the housing having a bottom wall (2), peripheral side walls (3) connected therewith and if applicable a cover detachably connected to the side walls (3), **characterized in that** the bottom wall (2) and/or the side walls (3) and/or the cover comprises or comprise first zones (4, 5, 6) with a higher strength than second zones forming the remaining regions of the walls, at least the first zones (4, 5, 6) being hot-formed, and only the first zones (4, 5, 6) being annealed.

2. The sheet metal housing according to claim 1, **characterized in that** the bottom wall (2) and/or the side walls (3) and/or the cover is or are made of high-tensile steel.

3. The sheet metal housing according to one of claims 1 or 2, **characterized in that** the bottom wall (2) is integrally formed with the side walls (3) and is designed as a hot-formed trough, the walls of which are annealed in the predetermined first zones (4, 5, 6).

4. The sheet metal housing according to one of claims 1 to 3, **characterized in that** the housing is substantially rectangular and is secured with two parallel peripheral edges at the motor vehicle in parallel to the longitudinal central axis of the thus equipped vehicle, and that the first zones (4, 5, 6) are material regions of the bottom (2) and/or of the side wall (3) and/or of the cover, which are predominantly oriented transversely to the longitudinal central axis of the vehicle.

5. The sheet metal housing according to one of claims 1 to 4, **characterized in that** the side walls (3) are bent outwards at their peripheral edges facing away from the bottom wall (2), thus forming a flange edge (8).

6. The sheet metal housing according to one of claims 1 to 5, **characterized in that** the first zones (4, 5, 6) extend over portions of the bottom wall (2), which are each adjacent to two parallel side walls (3), and extend over these side walls (3), as well as portions of the adjacent side walls (3) directed at right angles thereto in the width that is determined by the first zone (4) provided in the bottom wall (2), and extend over the adjacent flange edge portions (8) of these regions of the side walls (3).

7. The sheet metal housing according to one of claims 3 to 6, **characterized in that** the hot-formed trough forms a very small radius in the corner regions of the side walls (3), said very small radius coming close to a rectangular configuration of the corner region.

## Revendications

1. Boîtier en tôle d'acier pour recevoir une pluralité d'accumulateurs (1), qui sont prévus à l'alimentation d'énergie pour la propulsion de véhicules à moteur, en particulier automobiles, le boîtier ayant une paroi de fond (2), des parois latérales (3) périphériques liées à celle-ci et le cas échéant un couvercle fixé de façon détachable aux parois latérales (3), **caractérisé en ce que** la paroi de fond (2) et/ou les parois latérales (3) et/ou le couvercle comprend ou comprennent des premières zones (4, 5, 6) à plus haute résistance que des deuxièmes zones formant les régions restantes des parois, au moins les premières zones (4, 5, 6) étant déformées à chaud, et seulement les premières zones (4, 5, 6) étant recuites.

2. Boîtier en tôle d'acier selon la revendication 1, **caractérisé en ce que** la paroi de fond (2) et/ou les parois latérales (3) et/ou le couvercle est réalisé ou sont réalisés en acier à très haute résistance.

3. Boîtier en tôle d'acier selon une des revendications 1 ou 2, **caractérisé en ce que** la paroi de fond (2) est formée de façon unitaire avec les parois latérales (3) et est réalisée comme cuve déformée à chaud, les parois de laquelle sont recuites dans les premières zones (4, 5, 6) prédéterminées.

4. Boîtier en tôle d'acier selon une des revendications 1 à 3, **caractérisé en ce que** le boîtier est essentiellement rectangulaire et est fixé avec deux arêtes de bord parallèles au véhicule à moteur en parallèle à l'axe central longitudinal du véhicule tellement équipé, et que les premières zones (4, 5, 6) sont des parties de matériau du fond (2) et/ou de la paroi latérale (3) et/ou du couvercle, qui sont principalement alignées transversalement à l'axe central longitudinal du véhicule.

5. Boîtier en tôle d'acier selon une des revendications 1 à 4, **caractérisé en ce que** les parois latérales (3) sont inclinées vers l'extérieur à leurs arêtes de bord opposées à la paroi de fond (2), donc formant un bord de bride (8).

6. Boîtier en tôle d'acier selon une des revendications 1 à 5, **caractérisé en ce que** les premières zones (4, 5, 6) s'étendent sur des parties de la paroi de fond (2), qui sont chacune voisines à deux parois latérales (3) parallèles, et s'étendent sur ces parois latérales (3), aussi bien comme des parties des parois latérales (3) voisines dirigées perpendiculairement à celles-ci dans la largeur qui est déterminée par la première zone (4) prévue dans la paroi de fond (2), et s'étendent sur les parties de bord de bride (8) voisines de ces régions des parois latérales (3).

7. Boîtier en tôle d'acier selon une des revendications 3 à 6, **caractérisé en ce que** la cuve déformée à chaud forme un très petit rayon dans les régions de coin des parois latérales (3), ce très petit rayon s'approchant d'une configuration rectangulaire de la région de coin.
